# EUROPEAN PATENT APPLICATION

(11) **EP 4 790 750 A1**
(43) Date of publication of application: **12.08.2026**
(21) Application number: 25735791.3
(22) Date of filing: 21.03.2025
(51) Int. Cl.: H01M 4/02, H01M 10/052, H01M 10/0585

(54) **ELECTRODE SHEET, ELECTRODE ASSEMBLY AND BATTERY CELL**

(30) Priority: 18.12.2024 CN 202423136576 U
(71) Applicant: Eve Energy Co., Ltd., Huizhou, Guangdong 516006 (CN)
(72) Inventor: XU, Tao, Huizhou, Guangdong 516006 (CN); BU, Fang, Huizhou, Guangdong 516006 (CN); LI, Guiping, Huizhou, Guangdong 516006 (CN); GUAN, Hongtao, Huizhou, Guangdong 516006 (CN); LV, Yunhui, Huizhou, Guangdong 516006 (CN)
(74) Representative: Berggren Oy
(86) International application number: PCT/CN2025/083949
(87) International publication number: WO 2026/129505

(57) **Abstract**

Provided are an electrode sheet, an electrode assembly, and a battery cell, relating to the field of battery technology. The electrode sheet includes a current collector, an active material layer, and an electrode tab. The current collector includes a body and a protruding portion protruding outwardly from a part of an edge of the body. The active material layer is provided on the body and the protruding portion. The electrode tab is connected to the body.

## Description

This application claims priority to Chinese Patent Application No. 202423136576.9, filed on December 18, 2024 with the China National Intellectual Property Administration, the entire contents of which are incorporated herein by reference.

### Technical Field

The present invention relates to the field of battery technology, and specifically relates to an electrode sheet, an electrode assembly and a battery cell.

### Background

A battery cell includes a housing and an electrode assembly disposed within the housing. The electrode assembly can be classified into a stacked type and a wound type according to the forming method. The stacked electrode assembly includes separators, negative electrode sheets, separators, and positive electrode sheets, which are sequentially stacked.

### Summary

Stacked electrode assemblies have low energy density.

Some embodiments of the present invention provide an electrode sheet, an electrode assembly, and a battery cell, which can enhance the energy density of the stacked electrode assembly.

In a first aspect, the present invention provides an electrode sheet. The electrode sheet includes a current collector, an active material layer, and an electrode tab. The current collector includes a body and a protruding portion protruding outwardly from a part of an edge of the body. The active material layer is provided on the body and the protruding portion. The electrode tab is connected to the body.

In a second aspect, the present invention provides an electrode assembly. The electrode assembly includes multiple negative electrode sheets, multiple positive electrode sheets, and multiple separators. The positive electrode sheets are alternately stacked with the negative electrode sheets. The separators are for electrically insulating and isolating each of the positive electrode sheets from an adjacent one of the negative electrode sheets. Each of the negative electrode sheets is the above-described electrode sheet.

In a third aspect, the present invention provides a battery cell. The battery cell includes a housing and the above-described electrode assembly. The electrode assembly is disposed within the housing. The positive electrode sheet or the negative electrode sheet is connected to the housing.

### Advantages

In the present invention, by providing the protruding portion at the edge of the body, the amount of the active material layer of the electrode sheet can be increased, and thus the energy density of the electrode assembly can be enhanced to increase the energy density of the battery cell.

### Brief Description of the Drawings

FIG. 1 is a schematic diagram of the structure of an electrode sheet provided by some embodiments of the present application.
FIG. 2 is a side view of the electrode sheet provided by some embodiments of the present application.
FIG. 3 is a schematic diagram of the structure of a current collector provided by some embodiments of the present application.
FIG. 4 is a schematic diagram of a localized structure of the current collector provided by some embodiments of the present application.
FIG. 5 is another schematic diagram of the structure of an electrode sheet provided by some embodiments of the present application.
FIG. 6 is a schematic diagram of the structure of an electrode assembly provided by some embodiments of the present application.
FIG. 7 is a side view of the electrode assembly provided by some embodiments of the present application.
FIG. 8 is an enlarged view at area A in FIG. 6.
FIG. 9 is a schematic diagram of the structure of a battery cell provided by some embodiments of the present application.

Reference signs are as below.
1 - electrode sheet; 11 - current collector; 111 - body; 112 - protruding portion; 113 - first edge Z; 114 - second edge Z; 115 - third edge Z; 116 - first edge B;
12 - active material layer; 13 - electrode tab; 131 - extension edge; 14 - first corner;
2 - electrode assembly; 21 - negative electrode sheet; 22 - positive electrode sheet; 221 - positive electrode tab; 23 - separator;
3 - battery cell; 31 - housing; 32- positive terminal post.

### Detailed Description

The related art of the present application is described before an electrode sheet, an electrode assembly, and a battery cell in the present application are described.

In the related art, a battery cell includes a housing and an electrode assembly disposed within the housing. The electrode assembly can be classified into a stacked type and a wound type according to the forming method. The stacked electrode assembly includes separators, negative electrode sheets, separators, and positive electrode sheets, which are sequentially stacked. In the production process of the stacked electrode assembly, in order to enhance the reliability of the battery cell with such a stacked electrode assembly, an insulating layer can be provided at the edge of the positive electrode sheet to avoid lithium plating on the edge of the positive electrode sheet. Based on the existing process for setting the insulating layer, the minimum width of the insulating layer that can be set on the edge of the positive electrode sheet is 2 mm, and the minimum thickness of the insulating layer is 20 µm. Generally, the thickness of the positive electrode sheet is 100~160 µm. In the direction of the thickness of the positive electrode sheet, the insulating layer takes up 12.5%~20% of the thickness of the positive electrode sheet. Therefore, it will lead to 1%~2% capacity loss of the battery cell.

In consumer electronic products such as smart-watches and AR glasses, the size of battery cells used therein is not only small, but also has a large difference between its length and width dimensions. Correspondingly, the size of electrode sheets included by these battery cells is also small, and the difference in length and width is also large. If lithium plating at the edge of the positive electrode sheet is prevented by setting the insulating layer, the loss of capacity of these battery cells will be obvious.

Based on this, to improve the energy density of a battery cell, especially to improve the energy density of a small-sized battery cell, some embodiments of the present application provide an electrode sheet, an electrode assembly, and a battery cell. The present application is described in detail by the following embodiments, respectively.

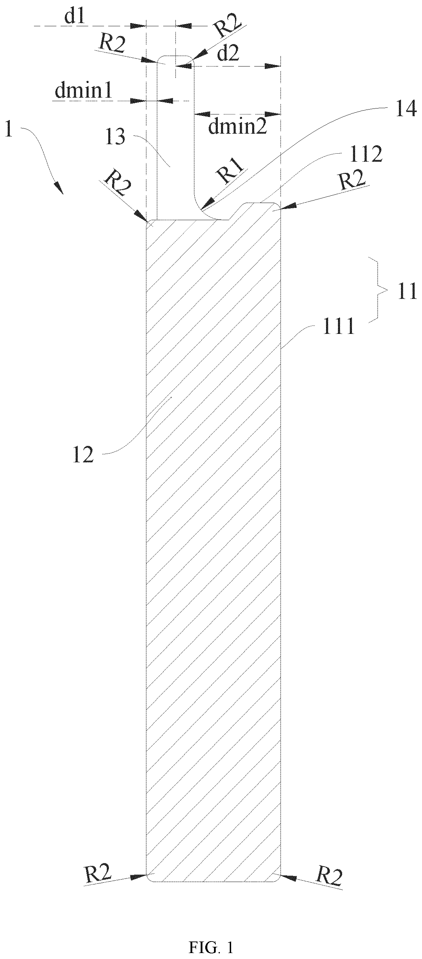

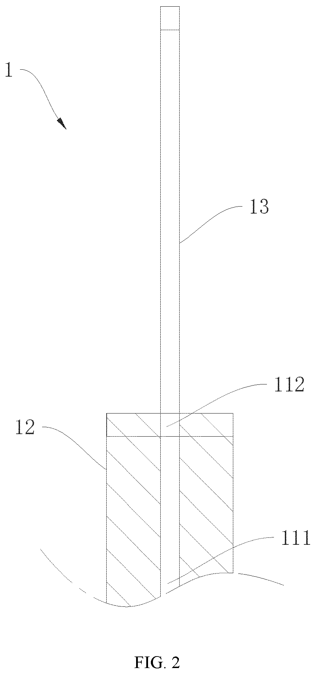

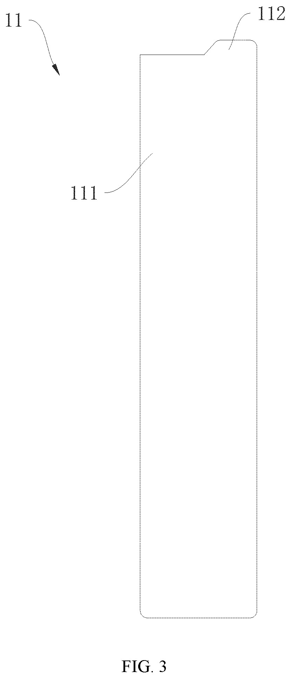

Referring to FIGS. 1 to 3, FIG. 1 is a schematic diagram of the structure of an electrode sheet 1 provided by some embodiments of the present application, FIG. 2 is a side view of the electrode sheet 1 provided by some embodiments of the present application, and FIG. 3 is a schematic diagram of the structure of a current collector 11 provided by some embodiments of the present application. Some embodiments of the present application provide an electrode sheet 1. The electrode sheet 1 includes a current collector 11, an active material layer 12, and an electrode tab 13. The current collector 11 includes a body 111 and a protruding portion 112 protruding outwardly from a part of an edge of the body 111. The active material layer 12 is provided on the body 111 and the protruding portion 112. The electrode tab 13 is connected to the body 111.

It will be appreciated that the protruding portion 112 is provided such that the structure of the electrode sheet 1 after removing the electrode tab 13 is an irregular structure. For example, when the body 111 is rectangular, a part of the edge of the body 111 is connected to the electrode tab 13, and another part of the edge of the body 111 is connected to the protruding portion 112.

It will be appreciated that the electrode tab 13 and the current collector 11 may be molded in one piece. For example, a part of a foil is configured to be provided with the active material layer 12, and another part of the foil is left blank to serve as the electrode tab 13. Alternatively, the electrode tab 13 may be welded to the current collector 11.

It is to be understood that the main materials of the active material layer 12 of a positive electrode sheet 22 include, but are not limited to, lithium cobalt oxide, lithium nickel manganese cobalt oxide, lithium iron phosphate, conductive agent, and binder. The main materials of the active material layer 12 of a negative electrode sheet 21 include, but are not limited to, graphite, conductive agent, and binder.

In addition, to prevent lithium plating, the electrode sheet 1 provided in the embodiments may be a negative electrode sheet 21. As such, a greater number of lithium intercalation sites can be provided for the battery cell 3 to effectively prevent lithium ions from being deposited and precipitated in the form of metallic lithium.

It will be understood that in order to control the space occupied by the protruding portion 112, the electrode sheet 1 may be used in a stacked electrode assembly 2, and the protruding portion 112 of the electrode sheet 1 is configured to be disposed opposite an electrode tab of a positive electrode sheet along a thickness direction of the electrode sheet 1, i.e., the protruding portion 112 of the electrode sheet 1 provided in the embodiments may be disposed opposite the electrode tab of the positive electrode sheet. In this way, it causes the space occupied by the protruding portion 112 to be a space between electrode tabs of positive electrode sheets, so that there is no impact on the outer dimensions of the battery cell 3.

In the embodiments, by providing the protruding portion 112 at the edge of the body 111, the amount of the active material layer 12 in the electrode sheet 1 can be increased, so that the energy density of the electrode assembly 2 can be enhanced to improve the energy density of the battery cell 3.

Furthermore, when the electrode sheet 1 provided in the embodiments is the negative electrode sheet 21, the protruding portion 112 is provided at the edge of the body 111, and therefore the number of lithium intercalation sites in the electrode assembly 2 can be increased, thereby effectively prevent lithium ions from being deposited and precipitated in the form of metallic lithium, and reducing the risk of lithium plating of the electrode assembly 2. In this way, the reliability of the battery cell 3 can be enhanced.

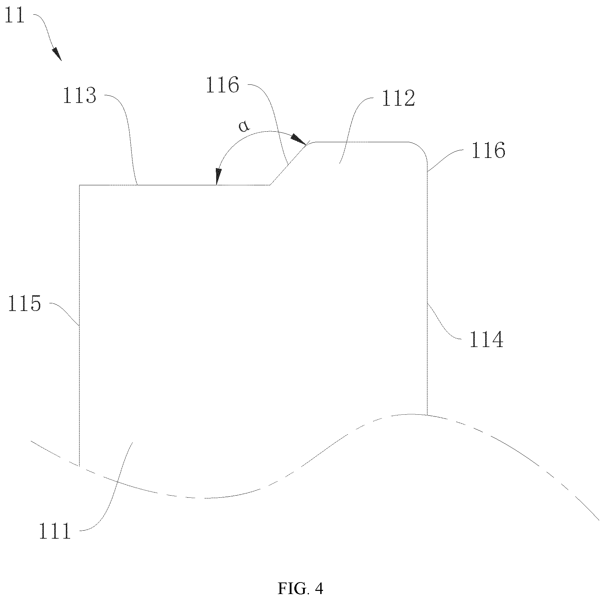

Referring to FIG. 4, FIG. 4 is a schematic diagram of a localized structure of a current collector provided by some embodiments of the present application. In the embodiments, the body 111 has a first edge Z 113 and a second edge Z 114 which are connected. The first edge Z 113 is disposed at an angle to the second edge Z 114. The protruding portion 112 may protrude outwardly from a part of the first edge Z 113, and the protruding portion 112 has two first edges B 116 extending along the protruding direction. One of the first edges B 116 is disposed collinear with the second edge Z 114.

It will be appreciated that the term "collinear arrangement" refers to a configuration in which the projection of the first edge B 116 and the projection of the second edge Z 114 lie on the same straight line in a plane parallel to the electrode sheet 1.

It will be understood that the corners of the electrode sheet 1 may be chamfered or rounded to reduce the stress concentration at the corners of the electrode sheet 1 and to prevent the sharp corners of the electrode sheet 1 from piercing a separator 23 and the like. When the corners of the body 111 is chamfered or rounded, it will cause the body 111 to lose a part of the current collector 11 in which the active material layer 12 can be provided.

Based on this, in the embodiments, the number of corners at the body 111 can be reduced by setting one first edge B 116 collinear with the second edge Z 114. In this way, on the one hand, the area of the electrode sheet 1 that can be provided with the active material layer 12 increases, so that the amount of the active material layer 12 provided in the electrode sheet 1 increases, facilitating the enhancement of the energy density of the electrode assembly 2; on the other hand, the number of the corners of the electrode sheet 1 can be reduced, thereby reducing the parts of the electrode sheet 1 in which the stresses are more centralized, and improving the stressing state of the electrode sheet 1.

Referring to FIG. 4, in some embodiments, an obtuse angle α is defined between the first edge B 116, away from the second edge Z 114, and the first edge Z 113. In this way, the stress concentration at the corner formed between the first edge B 116 and the first edge Z 113 can be reduced to improve the state of the stress at the joint between the first edge B 116 and the first edge Z 113.

It will be appreciated that the obtuse angle α is located outside the protruding portion 112.

Referring to FIG. 4, in some embodiments, 90° < α ≤ 135°.

It will be appreciated that the obtuse angle α includes, but is not limited to, 91°, 92°, 93°, 94°, 95°, 96°, 97°, 98°, 99°, 100°, 101°, 102°, 103°, 104°, 105°, 106°, 107°, 108°, 109°, 110°, 111°, 112°, 113°, 114°, 115°, 116°, 117°, 118°, 119°, 120°, 121°, 122°, 123°, 124°, 125°, 126°, 127°, 128°, 129°, 130°, 131°, 132°, 133°, 134°, and 135°.

In the embodiments, by the above-described setting, the obtuse angle α can be between the first edge B 116 and the first edge Z 113, and the protruding portion 112 can be made to have a larger area, thereby a larger amount of the active material layer 12 can be provided to enhance the energy density of the electrode assembly 2.

Referring to FIG. 4, in some embodiments, H represents the spacing between a side of the protruding portion 112 away from the body 111 and an edge of the body 111 connected to the protruding portion 112, and H satisfies: 0 < H ≤ 2 mm.

It will be appreciated that the spacing H between the side of the protruding portion 112 away from the body 111 and the edge of the body 111 connected to the protruding portion 112 includes, but is not limited to, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm.

It can be understood that the separator 23 is employed to electrically insulate and isolate the positive electrode sheet 22 and its adjacent negative electrode sheet 21. And in order to enhance the reliability of the separator 23 in electrically insulating and isolating the positive electrode sheet 22 from the negative electrode sheet 21, the separator 23 will be set beyond the edge of the body 111, generally beyond 2 mm.

Based on this, in the embodiments, by the above-described setting, the protruding portion 112 can be molded to facilitate the enhancement of the energy density of the electrode assembly 2, and the insulating isolation between the electrode sheet 1 of one polarity and its adjacent electrode sheet 1 of the opposite polarity can be effectively ensured, thereby the reliability of the electrode assembly 2 can be enhanced.

It will be appreciated that if the separator 23 extends beyond the edge of the body 111 by 1 mm, the maximum value of the spacing H, between the side of the protruding portion 112 away from the body 111 and the edge of the body 111 connected to the protruding portion 112, is 1 mm.

Referring to FIG. 1, in some embodiments, the body 111 has a third edge Z 115, a first edge Z 113, and a second edge Z 114 which are sequentially connected. The third edge Z 115 and the second edge Z 114 are disposed at an angle to the first edge Z 113 separately. The electrode tab 13 is connected to the first edge Z 113. The spacing between the electrode tab 13 and the third edge Z 115 is not equal to the spacing between the electrode tab 13 and the second edge Z 114. In this way, it can be advantageous for an assembler to determine whether the electrode tab 13 of the electrode sheet 1 is located on the left side or the right side of the body 111 according to these two unequal spacings, thereby facilitating rapid assembling of this electrode sheet 1 and another electrode sheet 1 of the opposite polarity.

Referring to FIG. 1, in some embodiments, the minimum spacing between the electrode tab 13 and the third edge Z 115 is dmin1, where 0 ≤ dmin1 ≤ 20 mm; alternatively, the minimum spacing between the electrode tab 13 and the second edge Z 114 is dmin2, where 0 ≤ dmin2 ≤ 20 mm.

The minimum spacing dmin1 between the electrode tab 13 and the third edge Z 115 includes, but is not limited to, 0, 0.1 mm, 1.2 mm, 2.3 mm, 3.4 mm, 4.5 mm, 5.6 mm, 6.7 mm, 7.8 mm, 8.9 mm, 10.0 mm, 11.1 mm, 12.2 mm, 13.3 mm, 14.4 mm, 15.5 mm, 16.6 mm, 17.7 mm, 18.8 mm, and 20 mm.

The minimum spacing dmin2 between the electrode tab 13 and the second edge Z 114 includes, but is not limited to, 0, 0.5 mm, 2.5 mm, 3.6 mm, 4.7 mm, 5.8 mm, 6.9 mm, 8.0 mm, 9.1 mm, 10.2 mm, 11.5 mm, 12.6 mm, 13.7 mm, 14.8 mm, 15.9 mm, 16.0 mm, 17.1 mm, 18.2 mm, 19.3 mm, and 20 mm.

In the embodiments, the above arrangement is employed to facilitate biasing the electrode tab 13 to be located on one side of the body 111, which can facilitate an assembler to determine whether the electrode tab 13 of the electrode sheet 1 is located on the left side or the right side of the body 111 based on the distances between the electrode tab 13 and side edges of the body 111 , thereby facilitating rapid assembling of this electrode sheet 1 and another electrode sheet 1 of the opposite polarity.

Referring to FIG. 1, in some embodiments, the spacing between the electrode tab 13 and the third edge Z 115 is d1, and the spacing between the electrode tab 13 and the second edge Z 114 is d2, d1 and d2 satisfying: |*d*1 - *d*2| ≥ 2 *mm*.

It will be appreciated that the absolute value of the interpolated value between the spacing d1 and the spacing d2 includes, but is not limited to, 2 mm, 2.1 mm, 2.2 mm, 2.3 mm, 2.4 mm, 2.5 mm, 2.6 mm, 2.7 mm, 2.8 mm, 2.9 mm, and 3 mm.

It will be appreciated that if the electrode tab 13 and the protruding portion 112 are located on the same side of the body 111, the position of the electrode tab 13 does not interfere with the position of the protruding portion 112.

In the embodiments, by employing the above arrangement, it is convenient for an assembler to carry out direct observation of the electrode tab 13 by means of the naked eye, so that he or she can clearly distinguish whether the electrode tab 13 is located on the left side or the right side of the electrode sheet 1, and thus the rapidity of assembling this electrode sheet 1 with the electrode sheet 1 of the opposite polarity can be ensured.

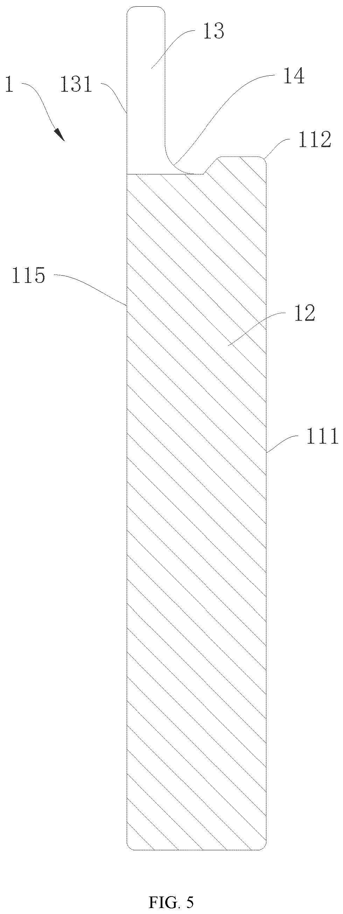

Referring to FIG. 5, FIG. 5 is another schematic diagram of the structure of an electrode sheet 1 provided by some embodiments of the present application. In some embodiments, the body 111 has a first edge Z 113 and a third edge Z 115 which are connected. The first edge Z 113 is provided at an angle to the third edge Z 115. One side of the electrode tab 13 is connected to the first edge Z 113. The electrode tab 13 has two extension edges 131 along an extension direction of the electrode tab 13, where one of the extension edges 131 is disposed collinear with the third edge Z 115.

It will be understood that the corners of the electrode sheet 1 may be chamfered or rounded to reduce the stress concentration at the corners of the electrode sheet 1 and to prevent the sharp corners of the electrode sheet 1 from piercing the separator 23 and the like. When the corners of the body 111 is chamfered or rounded, it will cause the body 111 to lose a part of the current collector 11 in which the active material layer 12 can be provided.

Based on this, in the embodiments, one of the extension edges 131 is disposed collinear with the third edge Z 115, thereby reducing the number of the corners of the body 111. In this way, on the one hand, the area of the electrode sheet 1 that can be provided with the active material layer 12 increases, so that the amount of the active material layer 12 provided in the electrode sheet 1 increases, facilitating the enhancement of the energy density of the electrode assembly 2; on the other hand, the number of the corners of the electrode sheet 1 can be reduced, thereby reducing the parts of the electrode sheet 1 in which the stresses are more centralized, and improving the stressing state of the electrode sheet 1.

In addition, the one extension edge 131 is arranged collinear with the third edge Z 115, which helps prevent burrs and cracks in the electrode sheet 1 when the side of the body 111 closer to the electrode tab 13 is chamfered or rounded.

Referring to FIG. 1 or FIG. 5, in some embodiments, a first corner 14 is located at a joint between the electrode tab 13 and the current collector 11. A rounded corner R1 is provided at the first corner 14. Rounded corners R2 are provided at the remaining corners of the electrode sheet 1. The radius of the rounded corner R1 is larger than the radius of the rounded corner R2.

For example, the radius of each rounded corner R2 may be 0.3 mm, and the radius of the rounded corner R1 may be 2 mm.

At least one of the rounded corner R1 and the rounded corner R2 may have a radius that is gradually varied. By setting the corners of the electrode sheet 1 to change gradually, not only is the formation of sharp structures in the corners of the electrode sheet 1 - which could scratch the separator - prevented, but the electrode assembly 2, formed from the electrode sheet 1, is also guided smoothly when being loaded into a housing 31 of the battery cell 3, thereby contributing to improved assembly smoothness.

Specifically, when the radius of the rounded corner R1 is gradually varied, it may be that the radius of the rounded corner R1 gradually increases from the edge of the electrode tab 13 to the edge of the body 111, it may be that the radius of the rounded corner R1 gradually decreases from the edge of the electrode tab 13 to the edge of the body 111, and it may be that the radius of the rounded corner R1 gradually decreases from a certain position of the rounded corner R1 to the edge of the electrode tab 13 and the edge of the body 111 separately.

Specifically, when the radius of the rounded corner R2 is gradually varied, it may be that the radius of the rounded corner R2 gradually increases or decreases from one edge of the body 111 to the other edge of the body, and it may also be that the radius of the rounded corner R2 gradually decreases from a certain position of the rounded corner R2 to each of the two edges of the body 111 separately.

In the embodiments, the size of the joint between the electrode tab 13 and the body 111 can be increased by the above-described setting. In this way, not only can the area of the electrode tab 13 be increased-which enhances the strength of the joint between the electrode tab 13 and the body 111, thereby preventing breakage due to welding for the connection between the electrode tab 13 and the body 111, and improving the ease of welding operations for the electrode tab 13-but also the current-carrying area between the electrode tab 13 and the body 111 can be enlarged, thereby reducing the internal resistance of the battery cell 3.

Referring to FIG. 1 or FIG. 5, in some embodiments, the electrode tab 13 is located on the same side of the body 111 as the protruding portion 112. In this way, the protruding portion 112 can be made to share a portion of the height space with the electrode tab 13, so that the space occupied by the protruding portion 112 can be reduced, facilitating the enhancement of the compactness of the electrode assembly 2.

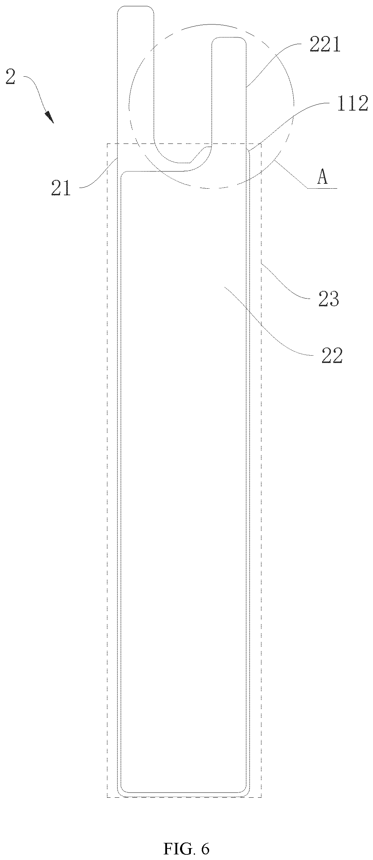

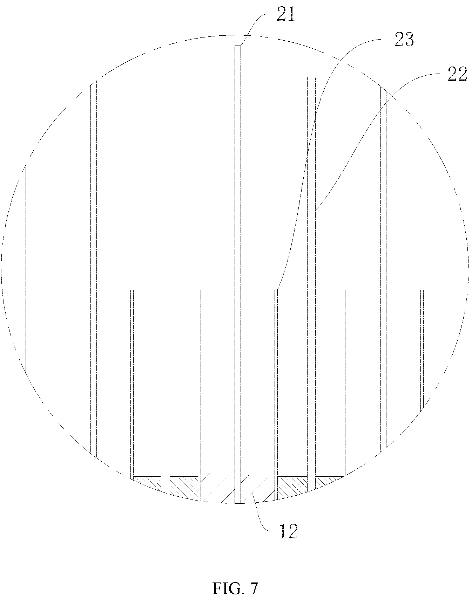

Referring to FIG. 6 and FIG. 7, FIG. 6 is a schematic diagram of the structure of an electrode assembly 2 provided by some embodiments of the present application, and FIG. 7 is a side view of the electrode assembly 2 provided by some embodiments of the present application. Some embodiments of the present application provide an electrode assembly 2. The electrode assembly 2 includes multiple negative electrode sheets 21, multiple positive electrode sheets 22, and multiple separators 23. The positive electrode sheets 22 are alternately stacked with the negative electrode sheets 21. Each separator 23 is configured to electrically insulate and isolate a corresponding positive electrode sheet 22 from its adjacent negative electrode sheet 21. The negative electrode sheets 21 herein may be the electrode sheet 1 of the above-described embodiments of the present application.

It will be appreciated that the protruding portion 112 is provided adjacent to a site on the positive electrode sheet 22 that is susceptible to lithium plating.

In the embodiments, the electrode sheet 1 provided in the embodiments of the present application may be used as the negative electrode sheet 21. In this way, the energy density of the electrode assembly 2 can be enhanced to enhance the energy density of the battery cell 3.

In some embodiments, each positive electrode sheet 22 has a positive electrode tab 221. The positive electrode tab 221 is disposed opposite the protruding portion 112 along the stacking direction. In this way, the active material layer 12 on the protruding portion 112 of the negative electrode sheet 21 can be made to be opposite an active material layer 12 on the positive electrode tab 221 of the positive electrode sheet 22, and therefore not only can the energy density of the electrode assembly 2 be enhanced, but also lithium ions at the edge of the positive electrode sheet 22 can be effectively prevented from being deposited and precipitated in the form of metallic lithium, reducing the risk of lithium plating of the electrode assembly 2. Consequently, the reliability of the battery cell 3 can be enhanced.

In addition, during the coating process of the positive active material layer 12, the coating position is easy to produce a misalignment in four directions, i.e., front, back, left and right directions, with respect to the current collector 11 of the positive electrode sheet 22. When the positive electrode sheet 22 is die-cut after coating, this misalignment can result in residual positive active material remaining on the electrode tab 13 of the electrode sheet 1. Therefore, in the embodiments, by setting the positive electrode tab 221 opposite the protruding portion 112, it is possible to reduce the risk of lithium plating due to the residual positive active substance on the positive electrode tab 221.

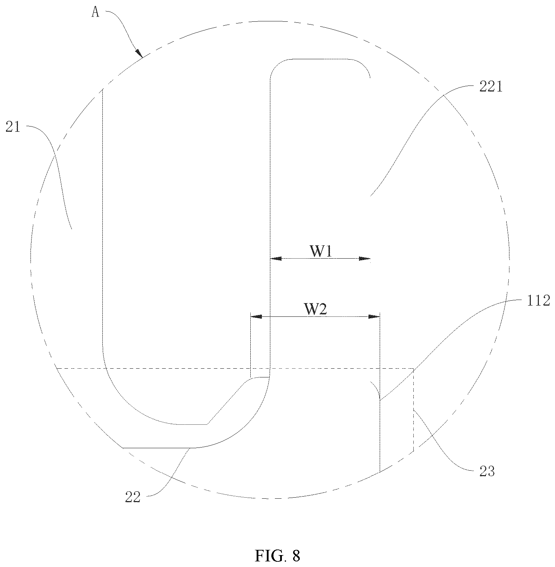

Referring to FIG. 8, FIG. 8 is an enlarged view at area A in FIG. 6. In some embodiments, the positive electrode tab 221 has a width dimension W1. In the direction where the width dimension W1 of the positive electrode tab 221 is located, the protruding portion 112 has a dimension W2 satisfying: W2 > W1. In this way, the overlapping area of the protruding portion 112 with the positive electrode tab 221 is increased, so that lithium ions at the edge of the positive electrode sheet 22 can be efficiently prevented from being deposited and precipitated in the form of metallic lithium.

The dimension W2 is the dimension of a side of the protruding portion 112 away from the body 111.

In some embodiments, along the stacking direction, the thickness of positive electrode sheets 22 located at the first and last positions is D1, and the thickness of the remaining positive electrode sheets 22 is D2, D1 and D2 satisfying: D1 > D2.

It can be understood that after the positive electrode sheets 22, the separators 23, and the negative electrode sheets 21 are stacked sequentially, ultrasonic waves will be used to weld electrode tabs 13 of the positive electrode sheets 22 into a single piece. Ultrasonic welding utilizes high-frequency vibration energy to cause the surfaces of materials to be welded to rub against each other, thereby generating heat and realizing the connection of the materials under pressure.

Therefore, when the positive electrode tabs 221 are welded as a single piece, the vibration acting on the positive electrode sheets 22 tends to cause the positive electrode sheet 22 located at the first and last positions along the stacking direction to be damaged or even chipped. Based on this, in the embodiments, the thickness D1 of the positive electrode sheets 22 located at the first and last positions is set to be larger, so that the strength of the positive electrode sheets 22 located at the first and last positions can be enhanced to avoid it from being damaged during the welding process.

In some embodiments, 16 µm ≤ D1≤ 25 µm, and 6 µm ≤ D2 ≤ 12 m. In this way, the positive electrode sheets 22 located at the first and last positions and the other positive electrode sheets 22, located between the positive electrode sheets 22 at the first and last positions, can be made to have suitable thickness dimensions, thereby ensuring that the soldering goes smoothly while controlling the material cost of the positive electrode sheets 22.

The thickness D1 includes, but is not limited to, 16 µm, 16.5 µm, 17 µm, 17.5 µm, 18 µm, 18.5 µm, 19 µm, 19.5 µm, 20 µm, 20.5 µm, 21 µm, 22 µm, 23 µm, 24 µm, and 25 µm.

The thickness D2 includes, but is not limited to, 6 µm, 6.5 µm, 7 µm, 7.5 µm, 8 µm, 8.5 µm, 9 µm, 9.5 µm, 10 µm, 10.5 µm, 11 µm, 11.5 µm, and 12 µm.

In some embodiments, along the stacking direction, negative electrode sheets 21 located at the first and last positions have a thickness of D3, and the remaining negative electrode sheets 21 have a thickness of D4, D3 and D4 satisfying: D3 > D4.

It can be understood that after the positive electrode sheets 22, the separators 23, and the negative electrode sheets 21 are stacked sequentially, ultrasonic waves will be used to weld electrode tabs 13 of the negative electrode sheets 21 into a single piece. Ultrasonic welding utilizes high-frequency vibration energy to cause the surfaces of materials to be welded to rub against each other, thereby generating heat and realizing the connection of the materials under pressure.

Therefore, when the negative electrode tabs 13 are welded as a single piece, the vibration acting on the negative electrode sheets 21 tends to cause the negative electrode sheets 21 located at the first and last positions along the stacking direction to be damaged or even chipped. Based on this, in the embodiments, the thickness D3 of the negative electrode sheets 21 located at the first and last positions is set to be larger, so that the strength of the negative electrode sheets 21 located at the first and last positions can be enhanced to avoid it from being damaged during the welding process.

In some embodiments, 12 µm ≤ D3 ≤ 30 µm, and 4 µm ≤ D4 ≤ 12 m. In this way, the negative electrode sheets 21 located at the first and last positions and the other negative electrode sheets 21, located between the negative electrode sheets 21 at the first and last positions, can be made to have suitable thickness dimensions, thereby ensuring that the soldering goes smoothly while controlling the material cost of the negative electrode sheets 21.

The thickness D3 includes, but is not limited to, 12 µm, 13 µm, 14 µm, 15 µm, 16 µm, 17 µm, 18 µm, 19 µm, 20 µm, 21 µm, 22 µm, 23 µm, 24 µm, 25 µm, 30 µm, 14.5 µm, 17.5 µm, 20.5 µm, 23.5 µm, 26.5 µm, 28.5 µm, and 30 µm.

The thickness D4 includes, but is not limited to, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 11 µm, 12 µm, 4.8 µm, 6.2 µm, 7.8 µm, 9.2 µm, 10.8 µm, and 12 µm.

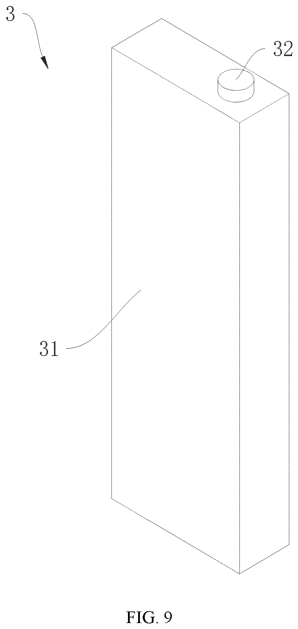

Referring to FIG. 9, FIG. 9 is a schematic diagram of the structure of a battery cell 3 provided by some embodiments of the present application. In some embodiments of the present application, the battery cell 3 is provided. The battery cell 3 includes a housing 31 and the electrode assembly 2 provided by the above-described embodiments of the present application. The electrode assembly 2 is disposed within the housing 31. One of the positive electrode sheet 22 and the negative electrode sheet 21 is electrically connected to the housing 31, and the other is electrically connected to a terminal post provided on the housing 31.

Specifically, the negative electrode sheet 21 is electrically connected to the housing 31, and the positive electrode sheet 22 is electrically insulated and isolated from the housing 31.

Specifically, the housing 31 is provided with a positive terminal post 32, and the positive terminal post 32 is electrically insulated and isolated from the housing 31. The electrode tab 13 of the positive electrode sheet 22 is electrically connected to the positive terminal post 32.

In addition, the positive electrode sheets 22 and the negative electrode sheets 21 are provided with rounded corners corresponding to the corners of the housing 31. The rounded corners on the negative electrode sheets 21 and the positive electrode sheets 22 have the same radius with the rounded corners adjacent thereto on the inner wall of the housing 31, thereby causing the circumferential edges of the rounded corners on the negative electrode sheets 21 and the positive electrode sheets 22 to be adapted to the circumferential deformations of the rounded corners adjacent thereto on the inner wall of the housing 31. In this way, the electrode assembly 2 can be brought into full contact with the inner wall of the housing 31, thereby the size of the inner cavity of the housing 31 occupied by the electrode assembly 2 can be increased to enhance the capacity density. Moreover, when the battery cell 3 is subjected to various types of vibration, impact, and other safety risks, the electrode assembly 2 can be made to be subjected to a uniform force, so as to reduce the risk of deformation and cracking of the positive electrode sheets 22 and the negative electrode sheets 21.

The battery cell 3 may be used in consumer electronics, for example, smart-watches and AR glasses.

In the embodiments of the present application, by adopting the electrode assembly 2 provided in the embodiments of the present application, the amount of the active material layer 12 of the electrode sheet 1 can be increased, and thus the energy density of the battery cell 3 can be enhanced. The technical solutions and technical effects of the present application are described in detail below by means of specific embodiments, and the following embodiments are only some of the embodiments of the present application, and are not a specific limitation of the present application.

These embodiments are intended to examine the effect of the application of the electrode sheet to the battery cell 3 on the capacity of the battery cell 3.

Tests on the embodiments are specified as follows.

### I. Test-related notes

The equipment used for the test is a power battery tester, which can be modelled as: CTE-8008-5V200A.

The test ambient temperature is: 25 ± 2 °C.

Test Object 1: The battery cell in the related art, which has a length of 45 mm, a width of 10 mm, a thickness of 3.2 mm, and a volume of 1440 mm3.

Test Object 2: The battery cell 3 provided in the embodiments of the present application, which has a length of 45 mm, a width of 10 mm, a thickness of 3.2 mm, and a volume of 1440 mm3.

### II. Testing

A capacity grading test was performed on Test Object 1, and the 0.2 capacity of Test Object 1 was measured to be 209 mAh.

A capacity grading test was performed on Test Object 2, and the 0.2 capacity of Test Object 2 was measured to be 215 mAh.

### III. Comparative notes

As can be seen from the test results, under the same volume, the capacity of the battery cell 3 provided by the embodiments of the present application is greater than the capacity of the battery cell in the related art. The capacity of the battery cell 3 provided by the embodiments of the present application is 2.9% more than the capacity of the battery cell in the related art. As such, it can be seen that the electrode sheet 1 provided by the embodiments of the present application can effectively increase the energy density of the battery cell 3.

The 0.2C capacity refers to the actual amount of charge that a battery cell can hold, measured during a capacity grading test conducted by charging and discharging the battery cell at a current equal to 0.2 times its rated capacity.

## Claims

1. An electrode sheet (1), **characterized by** comprising:
a current collector (11) comprising a body (111) and a protruding portion (112) protruding outwardly from a part of an edge of the body (111);
an active material layer (12) provided on the body (111) and the protruding portion (112); and
an electrode tab (13) connected to the body (111).

2. The electrode sheet (1) according to claim 1, wherein the body (111) has a first edge Z (113) and a second edge Z (114) which are connected, the first edge Z (113) being disposed at an angle to the second edge Z (114); wherein the protruding portion (112) protrudes outwardly from a part of the first edge Z (113), and the protruding portion (112) has two first edges B (116) extending along a protruding direction of the protruding portion (112), one of the first edges B (116) being disposed collinear with the second edge Z (114).

3. The electrode sheet (1) according to claim 2, wherein an obtuse angle α between the first edge B (116), away from the second edge Z (114), and the first edge Z (113) satisfies: 90° < α ≤ 135°.

4. The electrode sheet (1) according to any one of claims 1-3, wherein a spacing H between a side of the protruding portion (112) away from the body (111) and an edge of the body (111) connected to the protruding portion (112) satisfies: 0 < H ≤ 2 mm.

5. The electrode sheet (1) according to any one of claims 1-4, wherein the body (111) has a third edge Z (115), a first edge Z (113), and a second edge Z (114) connected sequentially, both of the third edge Z (115) and the second edge Z (114) being disposed at an angle to the first edge Z (113); and
the electrode tab (13) is connected to the first edge Z (113), and a spacing between the electrode tab (13) and the third edge Z (115) is not equal to a spacing between the electrode tab (13) and the second edge Z (114).

6. The electrode sheet (1) according to claim 5, wherein a minimum spacing dmin 1 between the electrode tab (13) and the third edge Z (115) satisfies 0 ≤ dmin1 ≤ 20 mm; or a minimum spacing dmin2 between the electrode tab (13) and the second edge Z (114) satisfies 0 ≤ dmin2 ≤ 20 mm.

7. The electrode sheet (1) according to claim 5 or 6, wherein a spacing d1 between the electrode tab (13) and the third edge Z (115) and a spacing d2 between the electrode tab (13) and the second edge Z (114) satisfy: |*d*1 - *d*2| ≥ 2 *mm*.

8. The electrode sheet (1) according to any one of claims 1-7, wherein the body (111) has a first edge Z (113) and a third edge Z (115) which are connected, the first edge Z (113) being disposed at an angle to the third edge Z (115); one side of the electrode tab (13) is connected to the first edge Z (113); and the electrode tab (13) has two extension edges (131) along an extension direction of the electrode tab (13), one of the extension edges (131) being disposed collinear with the third edge Z (115).

9. The electrode sheet (1) according to any one of claims 1-8, wherein a rounded corner R1 is provided at a first corner (14), the first corner (14) being located at a joint between the electrode tab (13) and the current collector (11); one or more rounded corners R2 are provided at one or more remaining corners of the electrode sheet (1), respectively; and the rounded corner R1 has a radius greater than a radius of the rounded corners R2; and
wherein the radius of at least one of the rounded corner R1 and the rounded corners R2 is gradually varied.

10. The electrode sheet (1) according to any one of claims 1-9, wherein the electrode tab (13) is located on a same side of the body (111) as the protruding portion (112).

11. An electrode assembly (2), **characterized by** comprising:
a plurality of negative electrode sheets (21);
a plurality of positive electrode sheets (22), the plurality of positive electrode sheets (22) and the plurality of negative electrode sheets (21) being alternately stacked ; and
a plurality of separators (23) for electrically insulating and isolating each of the plurality of positive electrode sheets (22) from an adjacent one of the plurality of negative electrode sheets (21);
wherein each of the plurality of negative electrode sheets (21) is the electrode sheet (1) according to any one of claims 1-10.

12. The electrode assembly (2) according to claim 11, wherein each positive electrode sheet (22) comprises a positive electrode tab (221), the positive electrode tab (221) being disposed opposite the protruding portion (112) along the stacking direction.

13. The electrode assembly (2) according to claim 12, wherein a width dimension W1 of the positive electrode tab (221) and a dimension W2 of the protruding portion (112) along a direction of the width dimension W1 of the positive electrode tab (221) satisfy: W2 > W1.

14. The electrode assembly (2) according to any one of claims 11-13, wherein along the stacking direction, two positive electrode sheets (22) respectively located at first and last positions of the plurality of positive electrode sheets (22) each have a thickness of D1, and the remaining positive electrode sheets (22) of the plurality of positive electrode sheets (22) each have a thickness of D2, D1 and D2 satisfying: D1 > D2.

15. The electrode assembly (2) according to claim 14, wherein 16 µm ≤ D1≤ 25 µm, 6 µm ≤ D2 ≤ 12 m.

16. The electrode assembly (2) according to any one of claims 11-15, wherein along the stacking direction, two negative electrode sheets (21) respectively located at first and last positions of the plurality of negative electrode sheets (21) each have a thickness of D3, and the remaining negative electrode sheets (21) of the plurality of negative electrode sheets (21) each have a thickness of D4, D3 and D4 satisfying: D3 > D4.

17. The electrode assembly (2) according to claim 16, wherein 12 µm ≤ D3 ≤ 30 µm, 4 µm ≤ D4 ≤ 12 m.

18. A battery cell (3), **characterized by** comprising:
a housing (31); and
an electrode assembly (2) according to any one of claims 11-17 within the housing.
